# EUROPEAN PATENT APPLICATION

(11) **EP 0 860 387 A1**
(43) Date of publication of application: **26.08.1998**
(21) Application number: 98103174.3
(22) Date of filing: 24.02.1998
(51) Int. Cl.: B65G 47/84, B65G 47/82

(54) **Method for conveying objects and apparatus for use in the method**

(30) Priority: 24.02.1997 DK 19597
(71) Applicant: System TM A/S, 8300 Odder (DK)
(72) Inventor: Thogersen, Poul, 8300 Odder (DK)
(74) Representative: Nielsen, Leif

(57) **Abstract**

The invention relates to a method and an apparatus for handling longitudinal items such as items in the woodworking industry. Such items may be parquet blocks, boards, lathes, slats, or the like. The invention is for example useful in connection with a vision plant where there is a need for a plant for handling with a very high capacity. The invention may also be used for manual estimation of quality and marking in connection with photocell reading of the marking and thereby determination of the position of sorting. The method and the apparatus perform a sorting of items for further handling by regulation of the displacement of the items for the further handling.

## Description

The present invention relates to a method and an apparatus for sorting of items.

Methods and apparatuses are known which are meant for sorting items. Within the woodworking industry it is especially in connection with handling of parquet blocks for floorings or in connection with handling of greater longitudinal items such as boards, lathes, slats, or the like for the wood industry that apparatuses for sorting are used.

With apparatuses for handling of e.g. longitudinal items in the building industry such as parquet blocks, flooring boards, planking boards, or lathes, a preliminary manual estimation of quality or an estimation of quality by use of vision techniques is performed. The preliminary estimation of quality serves to determine a given place of destination such as a piler for a given item of a given determined quality.

After the estimation of quality, firstly a sorting of the items is performed by use of a feeding to a band conveyor between a random laying up of items and to a sorting. The feeding leads the items from a first direction into a band conveyor in a second direction. Thereafter, it is necessary, by means of the sorting, to perform a sorting of the items between the feeding and a piling. The sorting leads the items from the second direction to a third direction. Finally, by means of the piling it is necessary to perform a piling of the parquet blocks, the boards, or the lathes in layers one on top of another.

Today, the sorting is performed by means of an apparatus that comprises a mill rotating around an axis. The mill is provided with a number of wings that displace the items in a direction perpendicular to the second direction when the items pass the mill.

Known handling of items such as items in the woodworking industry and known apparatuses for sorting of items possess substantial drawbacks. The sorting of items is, as mentioned, performed by a mill that leads the items in a second direction perpendicular to the first direction. The capacity of the mill is high, but the items are exposed to a combined displacement in the first direction as well as a perpendicular second direction. This means that the sorting of items does not become precise. If the items have a high-lying centre of gravity, there is furthermore the risk that the items will tilt when the mill displaces the items in another direction.

It appears from the above that a bottleneck arises by handling of items in the known manner. Depending of the shape of the items, of the demand for accuracy of the handling, and of the demand for capacity bottlenecks may arise by sorting.

However, it is the purpose of the present invention to provide a method and an apparatus that are capable of performing accurate sorting while at the same time sorting takes place with a high capacity.

This purpose is achieved by a sorting characterised in that the first item during the translational displacement in the first direction is displaced by the first displacement element translational forwards in the first direction, that the first item during the translational displacement in the second direction is displaced by the second displacement element translationally forwards in the second direction and that the second item during the translational displacement in the second direction is displaced by the second displacement element translationally forwards in the second direction.

It has been shown that the sorting is capable of performing an accurate handling of items at the same time as the capacity is high. Thus, the method is capable of performing an accurate handling of items while at the same time a great number of items may be handled within a given period of time.

By the method for sorting according to the invention, the sorting is also performed automatically. The features of the method leads to that sorting takes place both accurately and with a high capacity.

The invention will now be explained in detail with reference to the accompanying drawing, in which
- Fig. 1: shows a first view of an apparatus according to the invention for a second sorting of items,
- Fig. 2: shows a second view of an apparatus according to the invention for sorting of items.

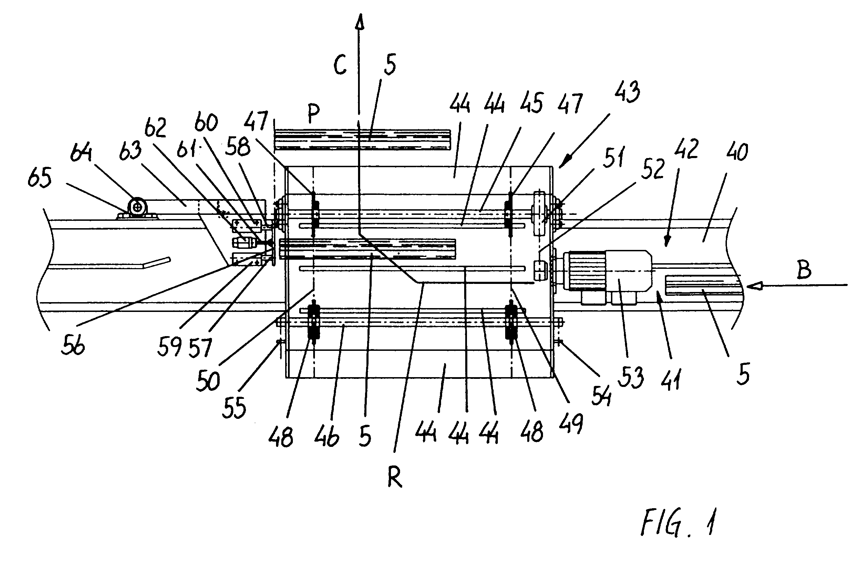

Fig. 1 is a first view of an apparatus for sorting items. The apparatus comprises a first displacement element in the shape of a single cord of a first band conveyor 40 that extends in the direction B. The single cord of the first band conveyor 40 is separated in a first lane 41 and a second lane 42. A first item 5 is situated in the first lane 41 of the band conveyor 40, a second item 5 is situated in the second lane 42 of the band conveyor, and a third item 5 is situated in a position P outside the band conveyor 40. A displacement element in the shape of a mill 43 is intended for displacing the items 5 on the band conveyor 40 in a direction C from the first lane 41 to the second lane 42. The mill 43 is furthermore intended for displacing the items 5 on the band conveyor 40 in a direction C further on from the second lane 42 to the position P outside the band conveyor. The mill 43 is provided with wings 44 intended for displacement in the direction C when the wings 44 are situated directly above the band conveyor 40.

The band conveyor 40 is intended to be driven in the direction B directly by means of a number of motors (not shown). The mill 43 is provided with a first axle 45 of rotation and a second axle 46 of rotation, each of which is provided with a pair of sprockets 47,48. The first axle 45 of rotation and the second axle 46 of rotation are mutually connected by means of chains 49,50 or belts that extend around the sprockets 47,48. The first axle 45 of rotation is provided with a further driving wheel 51. The mill 43 is, by means of a chain 52 or a band, drafted by a dotted line, stretching around the further driving wheel, driven by a motor 53. The second axle 46 of rotation is provided with chain tighteners 54,55 for adjusting the tension in the chains 49 or the bands. The chains 49,50 or the bands stretching in pairs around the sprockets 47,48 of the two axles 45,46 of rotation are provided with wings 44. The wings 44 extend perpendicularly outwards from the chains 49,50. In an area between the two axles 45,46 of rotation the wings 44 run in a lane in a direction C parallel with the surface S (see Fig. 4) of the band conveyor 40.

A stop 56 is mounted in the second lane 42 and is directed opposite the direction B. The stop 56 is intended for stopping items 5 which by the band conveyor 40 is displaced in the second lane 42 in the direction B and which, by means of the mill 43, has been displaced from the first lane 41 to the second lane 42. The stop 56 is provided with two first guides 57,58 that are telescopically displaceable in two first bushings 59,60 and an industrial shock absorber which consists of a second guide 61 that is telescopically displaceable in a second bushing 62, and which is provided with a spring (not shown) in the shape of a coil spring. The bushings 59,60,62 are attached to a steering arm 63 that is pivotable around an axle 64. The axle 64 is mounted in a bearing 65 that is attached to the frame 21. The stop may be provided with a flexible blade 66 (see Fig. 4) that extends downwards over the item 5 abutting the stop. The blade 66 is intended for preventing items 5 which at great speed are pushed against the stop from being displaced backwards opposite the direction B as a consequence of the influence of impact when the item 5 hits the stop 56.

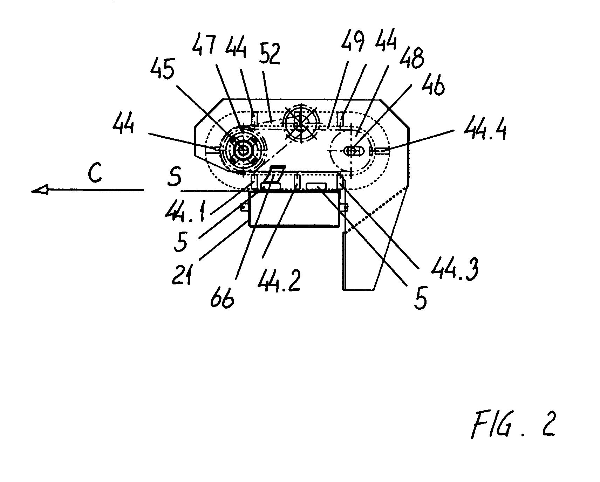

Fig. 2 is a second view of the apparatus for sorting items. The frame 21 carries the single parts of the apparatus. The chains 49,50 on the mill 43 are provided with eight wings 44. In the shown position of the mill 43, three wings 44 are placed directly above the surface S of the band conveyor 40. The wings 44 that are placed directly above the surface S of the band conveyor 40, are intended for displacement in the direction C. A displacement leads to that the second item 5 in the second lane 42 is displaced in the direction C to the position P outside the band conveyor 40.

The apparatus functions by that a first item 5 in the first lane 41 is displaced in the direction B. When the first item 5 is situated between a first mill wing 44.1 and a second mill wing 44.2, the mill wings 44 are displaced in the direction C and the first item 5 is displaced from the first lane 41 to the second lane 42. Immediately after a second subsequent item 5 is displaced on the band conveyor 40 in the first lane 41 in the direction B past the mill 43 between the second mill wing 44.2 and a third mill wing 44.3.

The first item 5 which has been displaced from the first lane 41 to the second lane 42 is subsequently, by means of the mill 43, displaced in the direction C to the position P outside the band conveyor 40. At the same time a third subsequent item 5 which at the same time is displaced in the direction B in the first lane 41 into the space between the third wing 44.3 and a fourth wing 44.4 on either side of the first lane 41is displaced in the direction C to the second lane 42 by means of the mill 43. The third item 5 will afterwards be displaced in the direction C at the same time as a fourth item in the first lane 41 is displaced in the direction B past the apparatus. By means of the second apparatus for sorting items, a more controlled displacement of items 5 from the band conveyor 40 in the direction C is obtained, as the items 5 are displaced in the direction C in two steps, namely firstly from the first lane 41 to the second lane 42 and subsequently from the second lane 42 to the position P outside the band conveyor 40. Displacement of items 5 is substantially performed along a lane illustrated by the line R.

Above, the invention is described with reference to a specific embodiment of an apparatus according to the invention. It will be possible to use other machine elements than the shown for building the apparatus according to the invention and for use of the method according to the invention.

## Claims

1. Method for sorting of items, which method involves that a first item is displaced translationally in a first direction (B) and where a second item at the same time is displaced translationally in another direction (C) where translation of the first item is performed by at the least a first displacement element (40) with a movement parallel to the first direction (B) and where displacement of the second item is performed by at least a second displacement element (73) with a movement parallel to the second direction(C), **characterised** in that the first item during the translational displacement is displaced simultaneously by the first displacement element (40) translationally forwards in the first direction (B) and by the second displacement element translationally forwards in the second direction (C) and that the second item during the translational displacement in the second direction (C) is displaced by the second displacement element translationally forwards in the second direction (C).

2. Apparatus to be used by the method according to claim 1, **characterised** in that the apparatus comprises a first displacement element (40) intended for displacing a first item in a first direction (B) and a second displacement element (43,44) intended for displacement of the first item and a second item in a second direction (C), that the first displacement element (40) is translationally displaceable in a plane parallel to the first direction (B) and that the second displacement element (43,44) is intended for performing a translatorical displacement of the first item and the second item in a plane parallel to the second direction (C).

3. Apparatus according to claim 2, **characterised** in that the apparatus is provided with a stop (56) and that the stop (56) is intended for performing a stop of a displacement of a first item in the first direction (B) by means of the first displacement element (40) after a displacement of the first item in the second direction (C) by means of the second displacement element (43,44).

4. Apparatus according to claim 2 or claim 3 **characterised** in that the first displacement element consists of a band conveyor (40) and that the second displacement element consists of a mill (43) that is provided with wings (44).

5. Apparatus according to claim 4 **characterised** in that the mill comprises a first axle (45) of rotation and a second axle (46) of rotation being parallel to the first axle of rotation, that the axles of rotation (45,46) are mutually connected by means of flexible longitudinal endless drive means (49,50) and that the wings (44) are mounted on the drive means (49,50).

6. Apparatus according to claim 4 or claim 5 **characterised** in that each of the wings (44) has a side which is capable of extension to a position in direct vicinity of a surface S of the band conveyor (40) so that at least two wings (44.2,44.3) at the same time have sides that are in the position in direct vicinity of the surface S.
